# EUROPEAN PATENT APPLICATION

(11) **EP 4 312 134 A1**
(43) Date of publication of application: **31.01.2024**
(21) Application number: 23188257.2
(22) Date of filing: 27.07.2023
(51) Int. Cl.: G06F 16/25

(54) **SELF-SERVICE DATA MESH**

(30) Priority: 29.07.2022 US 202263393679 P
(71) Applicant: Thoughtworks Technologies India Private Limited, Bangalore Kamataka 560034 (IN)
(72) Inventor: Verma, Sumedha, 110091 Delhi (IN); Akhtar, Syed, 110025 Delhi (IN); Mann, Nidhi, 110082 Delhi (IN)
(74) Representative: K&L Gates LLP

(57) **Abstract**

New and innovative systems and methods for federating operations, maintenance and governance of day to day activities in a data mesh platform are provided via a self-service mesh. A variety of embodiments include a computer-implemented method including obtaining a new data product request from a domain data system, generating domain data product definitions, providing the domain data product definitions to the domain data system, and updating a data catalog to indicate the domain data system and the domain data product definitions.

## Description

### CROSS-REFERENCES TO RELATED APPLICATIONS

The present disclosure claims benefit and priority to U.S. Provisional Patent Application No. filed July 29, 2022, and titled "SYSTEMS AND METHODS FOR A SELF-SERVICE DATA MESH", which is incorporated herein by reference in its entirety.

### TECHNICAL FIELD

The present disclosure generally relates to computer systems and more specifically to transforming data structures and data objects in distributed database systems.

### BACKGROUND

Business data, generated during the course of business operations, typically includes data generated from business processes and the additional data created by employees and/or customer actions. Organizations typically use centralized data warehouses to store, analyze, and report these business data. Data warehouses use databases to store, analyze, and harness the data. A variety of databases are commonly used, such as a relational database management systems or massively parallel processing analytical databases.

### SUMMARY

The present disclosure provides new and innovative systems and methods for federating operations, maintenance and governance of day-to-day activities in data mesh platforms. A variety of embodiments include a computer-implemented method including obtaining a new data product request from a domain data system, generating domain data product definitions, providing the domain data product definitions to the domain data system, and updating a data catalog to indicate the domain data system and the domain data product definitions.

In a variety of embodiments, the domain data product definitions include an indication of a data type and code for processing data of the data type.

In a variety of embodiments, the computer-implemented method further includes obtaining a request for data from a client device, the request for data indicating the domain data system, providing the request to the domain data system, obtaining requested data based on the request, validating the requested data, and providing the validated data to the client device.

In a variety of embodiments, validating the requested data includes executing code provided in the requested data to process data provided in the requested data.

In a variety of embodiments, tools and processes for creating the processes by developers and a way to deploy the changes seamlessly are provided.

In a variety of embodiments, tools and processes that make it easier for developers in other teams to view information, changes and interoperate with processes built by other teams are provided.

In a variety of embodiments, tools that allow enforcing of various organization standards and policies at an organization, department, domain and data product level are provided.

In a variety of embodiments, tools that allow customization and extension of the data mesh tooling itself to create more custom standards, processes and sub tooling are provided.

In a variety of embodiments, a self-service platform that allows creation of custom, access bounded and flexible infrastructure for the developers to deploy their processes and data assets with ease is provided.

In a variety of embodiments, tooling that allows the application of changes to core functionality and distributed tooling across multiple teams is provided.

Additional features and advantages of the disclosed methods and apparatuses are described in, and will be apparent from, the following Detailed Description and the Figures. The features and advantages described herein are not all-inclusive and, in particular, many additional features and advantages will be apparent to one of ordinary skill in the art in view of the figures and description. Moreover, it should be noted that the language used in the specification has been principally selected for readability and instructional purposes, and not to limit the scope of the inventive subject matter.

### BRIEF DESCRIPTION OF THE DRAWINGS

The description will be more fully understood with reference to the following figures, which are presented as exemplary aspects of the disclosure and should not be construed as a complete recitation of the scope of the disclosure, wherein:
FIG. 1 is a conceptual illustration of an operating environment in accordance with an example embodiment of the present disclosure;
FIG. 2 is a conceptual illustration of a computing device in accordance with an example embodiment of the present disclosure;
FIG. 3 illustrates a flowchart of a process for registering a domain data product in accordance with an example embodiment of the present disclosure;
FIG. 4 illustrates a flowchart of a process for providing data using a data catalog in accordance with an example embodiment of the present disclosure;
FIG. 5 is a conceptual illustration of a data mesh platform architecture in accordance with a variety of embodiments of the present disclosure;
FIG. 6 is a conceptual illustration of a data mesh platform in accordance with a variety of embodiments of the present disclosure;
FIG. 7 is a conceptual illustration of a data flow within a data mesh platform in accordance with a variety of embodiments of the present disclosure;
FIG. 8 is a conceptual illustration of a data product in accordance with a variety of embodiments of the present disclosure;
FIG. 9 is a conceptual illustration of a data product lifecycle creation flow in accordance with a variety of embodiments of the present disclosure;
FIG. 10 is a conceptual illustration of control flow between data product interfaces in accordance with a variety of embodiments of the present disclosure;
FIG. 11 is a conceptual illustration of a logical data architecture of a data mesh platform in accordance with a variety of embodiments of the present disclosure;
FIG. 12 is a data product creation workflow in accordance with an embodiment of the present disclosure;
FIG. 13 is a data product creation workflow in accordance with an embodiment of the present disclosure;
FIG. 14 is a flowchart conceptually illustrating a process for requesting a particular data product in accordance with an embodiment of the present disclosure;
FIG. 15 is a flowchart conceptually illustrating a process for accessing an existing data product in accordance with an embodiment of the present disclosure;
FIG. 16 is a flowchart conceptually illustrating a process for authenticating a request for data in accordance with an embodiment of the present disclosure;
FIG. 17 is pseudocode showing the structure of a request to initialize a data product in accordance with an embodiment of the present disclosure; and
FIG. 18 is pseudocode showing the structure of a request to update a data product in accordance with an embodiment of the present disclosure.

### DETAILED DESCRIPTION

Turning now to the drawings, systems and methods for delivery, governance, and interoperability of data assets in data mesh systems in accordance with a variety of embodiments of the present disclosure are disclosed. First generation data platforms typically include proprietary enterprise data warehouse and business intelligence platforms. These solutions have large price tags that have left companies with equally large amounts of technical debt in the form of unmaintainable extract, transform, and load (ETL) jobs and tables and reports that only a small group of specialized people understand. The second generation of data platforms typically include big data ecosystem with a data lake as a silver bullet. These are complex big data ecosystems having long running batch jobs operated by a central team of hyper-specialized data engineers that at best have enabled pockets of Research and Development (R&D) analytics. Current generation data platforms are more or less similar to the previous generations, albeit with a focus on streaming for real-time data availability, unifying the batch and stream processing for data transformation with frameworks, and using cloud based managed services for storage, data pipeline execution engines, and machine learning platforms. While third generation data platform address some of the gaps of the previous generations such as real-time data analytics, as well as reducing the cost of managing big data infrastructure, these data platform architectures suffer from many of the underlying characteristics that led to the failures of the previous generations.

Existing data platform architectures focus on a similar data flow: ingest source data from all corners of the enterprise and external data providers that augment the knowledge of the enterprise. The source data are cleansed, enriched, and transformed into trustworthy data that can address the needs of a diverse set of consumers. These datasets are served to a variety of consumers ranging from analytical consumption to exploring the data looking for insights, to machine learning based decision making, to business intelligence reports that summarize the performance of the business. These data platforms provide, host, and own the data that logically belong to different domains within the enterprise. There are four pressure points on the architecture and the organizational structure of these centralized data platform that often lead to failure: ubiquitous data and source proliferation and the innovation agenda of the organizations and consumer proliferation. As more data becomes ubiquitously available, the ability to consume all of the data and harmonize those data in one place under the control of one platform diminishes. For example, in the domain of 'customer information', there are an increasing number of sources inside and outside of the boundaries of the enterprise that provide information about the existing and potential customers. Existing data platforms need to ingest and store the data in one place to get value from diverse sets of sources, which constrains the ability of the platforms to respond to the proliferation of data sources. Further, an enterprise's need for rapid experimentation introduces a larger number of use cases for consumption of the data from the platform. This implies an ever growing number of transformations on the data - aggregates, projections, and slices that can satisfy the test and learn cycle of innovation. The long response time to satisfy the data consumer needs has historically been a point of organizational friction and remains to be so in existing data platform architectures.

Furthermore, typical centralized data platforms are difficult to maintain and scale. Architects and technical leaders in the enterprise decompose an architecture in response to the growth of the platform. However, the need for on-boarding new sources and responding to new consumers requires the platform to grow. Architects need to find a way to scale the system by breaking the system down to architectural quanta - an independently deployable component with high functional cohesion, which includes all the structural elements required for the system to function properly. The motivation behind breaking a system down into architectural quanta is to create independent teams that can each build and operate an architectural quantum. Given the influence of existing generations of data platforms' architecture, architects decompose the data platform to a pipeline of data processing stages. For example, a pipeline that at a very high level implements a functional cohesion around the technical implementation of processing data, such as the capabilities of ingestion, preparation, aggregation, serving, and the like. Although these architectures provide some level of scale, by assigning teams to different stages of the pipeline, the quantization has an inherent limitation that slows the delivery of features due to the high coupling between the stages of the pipeline to deliver an independent feature or value.

Additionally, the structure of the teams that build and own these data platform contributes to the failures. These teams typically include a group of hyper-specialized data engineers siloed from the operational units of the enterprise where the data originates or where the data are used and put into actions and decision making. The data platform engineers are not only siloed organizationally, but also separated and grouped into a team based on the technical expertise of the experts in relation to big data tooling, often absent of business and domain knowledge.

To overcome these architectural and implementation issues, a data mesh can be implemented by an enterprise to distribute the maintenance and governance of the enterprise's data. In contrast to the push and ingest architecture used in typical data platforms, traditionally through ETLs and more recently through event streams, a data mesh uses a serving and pull model across all domains in the enterprise. Each architectural quantum in a domain oriented data platform is a domain and not the pipeline stage. Some domains naturally align with the source where the data originates. The source domain datasets represent the facts and reality of the enterprise. The source domain datasets capture the data that are mapped very closely to what the operational systems of the origin of the data generate. These facts are best known and generated by the operational systems that sit at the point of origin. These source data domains should also provide easily consumable historical snapshots of the source domain datasets, aggregated over a time interval that closely reflects the interval of change for the respective domain. These source aligned domain datasets may be separated from the internal source systems' datasets. The nature of the domain datasets is very different from the internal data that the operational systems use; particularly, the domain datasets have a much larger volume, represent immutable timed facts, and change less frequently than the systems. Source domain datasets are the most foundational datasets and change less often, as the facts of an enterprise typically change infrequently. These domain datasets are expected to be permanently captured and made available, so that as the enterprise evolves its data-driven and intelligence services, users can go back to the business facts and create new aggregations or projections.

While the datasets ownership is delegated from the central platform to the domains, the need for cleansing, preparing, aggregating, and serving data remains, so does the usage of data pipeline. In the data mesh, a data pipeline is simply an internal complexity and implementation of the data domain and is handled internally within the domain. As a result, there is a distribution of the data pipelines stages into each domain. For example, the source domains need to include the cleansing, deduplicating, and enriching of domain events so that the data can be consumed by other domains without replication of cleansing. Each domain dataset must establish a Service Level Objectives for the quality of the data it provides: timeliness, error rates, and the like.

In order to be of greatest value, these distributed data products should be easily discoverable within the data mesh. Data mesh systems in accordance with embodiments of the present disclosure provide a data catalog of available data products with metadata such as owners, source of origin, lineage, sample datasets, and the like. This discoverability service allows data consumers, engineers, and scientists in an enterprise to find datasets. Each domain data product is preferably registered with this data catalog for easy discoverability. A data product has a unique address following a global convention that helps users to programmatically access that data product. The enterprise can implement different naming conventions for various data depending on the underlying storage and format of the data. In a decentralized architecture, common naming conventions should be enforced to facilitate the creation and usage of the data catalog.

For example, different domains can store and serve associated datasets in different formats. For example, events might be stored and accessed through streams such as Kafka topics, columnar datasets might use Comma Separated Value (CSV) files, or Amazon Web Service (AWS) S3 buckets of serialized Parquet files. A standard for addressability of datasets in a polyglot environment removes friction when finding and accessing information. The data products provide well described semantics and syntax of the data, ideally accompanied with sample datasets as exemplars. Data schemas are a starting point to provide self-serve data assets. Additionally, each data product provides an acceptable Service Level Objective (SLO) around the truthfulness of the data and an indication of how closely the data reflects the reality of the events that have occurred or the high probability of the truthfulness of the insights that have been generated.

For example, data cleansing and automated data integrity testing at the point of creation of the data product can be used to provide an acceptable level of quality. Providing data provenance and data lineage as the metadata associated with each data product helps consumers gain further confidence in the data product and its suitability for their particular needs.

Data mesh systems in accordance with embodiments of the present disclosure provide a shared platform for building and updating the APIs and the data product declarations over time, thereby facilitating both the management of data from each data product within the data mesh, and providing the data from each data product in the specified formats. To make analytical data product development accessible to generalist developers in an enterprise, the self-serve platform provides tools and interfaces in addition to simplifying provisioning of data. This tooling supports a domain data product developer's workflow of creating, maintaining and running data products with less specialized knowledge that existing technologies assume. This tooling enables distributed storage of files and interoperability across different technology stacks (e.g., different infrastructure components).

The underlying data can be stored in any type of database (e.g., file-based database, SQL database, BLOB database, data stream). The data mesh system uses data products that combine code and data into a single analytical unit. The data mesh includes data product declarations that specify data types for the type of data stored in the data product, input code for adding data to the data product, output code for extracting data from the data product, and/or control code for manipulating data stored within the data product and/or for altering the structure of the data product itself. Runtime APIs are setup to enable clients to access the underlying data products and to access/manipulate the data products. In this way, the data mesh can be used to ingest and communicate data without requiring a centralized data repository.

A variety of data mesh systems and data mesh processes in accordance with embodiments of the present disclosure are described herein with respect to various Figures.

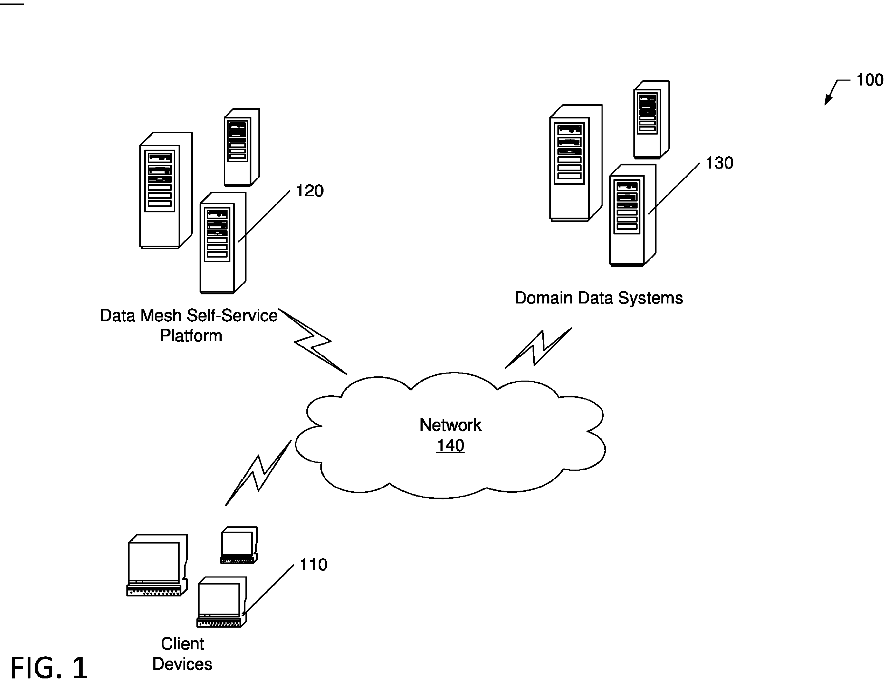

FIG. 1 illustrates a block diagram of an operating environment 100 in accordance with one or more aspects of the present disclosure. The operating environment 100 can include client devices 110, data mesh self-service platform 120, and/or domain data systems 130 in communication via a network 140. In many aspects, the data mesh self-service platform 120 and/or domain data systems 130 are implemented using a single server. In a variety of aspects, the data mesh self-service platform 120 and/or domain data systems 130 are implemented using a plurality of servers. In several aspects, client devices 110 are implemented using the data mesh self-service platform 120 and/or domain data systems 130. In a variety of aspects, data mesh self-service platform 120 and/or domain data systems 130 are implemented using the client devices 110.

Client devices 110 can request data from a data catalog and/or obtain data from data mesh self-service platform 120 and/or domain data systems 130 as described herein. Data mesh self-service platform 120 can provide a data catalog, register domain data systems 130 in the data catalog, and/or provide data responsive to requests from client devices 110 as described herein. Domain data systems 130 can provide domain data products as described herein.

Any data described herein can be transmitted between client devices 110 and/or processing server systems via network 140. The network 140 can include a LAN (local area network), a WAN (wide area network), telephone network (e.g. Public Switched Telephone Network (PSTN)), Session Initiation Protocol (SIP) network, wireless network, point-to-point network, star network, token ring network, hub network, wireless networks (including protocols such as EDGE, 3G, 4G LTE, Wi-Fi, 5G, WiMAX, and the like), the Internet, and the like. A variety of authorization and authentication techniques, such as username/password, Open Authorization (OAuth), Kerberos, SecurelD, digital certificates, and more, may be used to secure the communications. It will be appreciated that the network connections shown in the operating environment 100 are illustrative, and any means of establishing one or more communications links between the computing devices may be used.

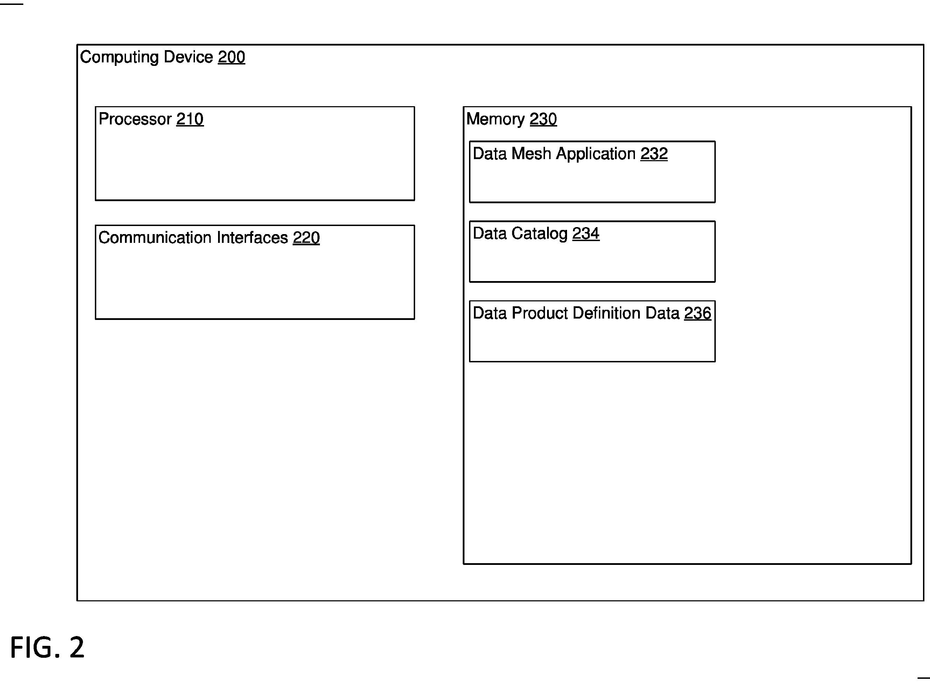

Any of the devices shown in FIG. 1 (e.g. client devices 110, data mesh self-service platform 120, and/or domain data systems 130) can include a single computing device, multiple computing devices, a cluster of computing devices, and the like. A conceptual illustration of a computing device in accordance with an embodiment of the present disclosure is shown in FIG. 2.

The computing device 200 includes a processor 210 in communication with memory 230. The computing device 200 can also include one or more communication interfaces 220 capable of sending and receiving data. In a number of embodiments, the communication interface 220 is in communication with the processor 210 and/or the memory 230. In several embodiments, the memory 230 is any form of storage storing a variety of data, including, but not limited to, a data mesh application 232, a data catalog 234, and/or data product definition data 236. In many embodiments, data mesh application 232, a data catalog 234, and/or data product definition data 236 are stored using an external server system and received by the computing device 200 using the communications interface 220. The processor 210 can be directed, by instructions in the data mesh application 232, to perform a variety of data mesh processes as described herein.

The processor 210 can include one or more physical processors communicatively coupled to memory devices, input/output devices, and the like. As used herein, a processor 210 may also be referred to as a central processing unit (CPU). Additionally, as used herein, a processor 210 can include one or more devices capable of executing instructions encoding arithmetic, logical, and/or I/O operations. In one illustrative example, a processor may implement a Von Neumann architectural model and may include an arithmetic logic unit (ALU), a control unit, and a plurality of registers. In many aspects, a processor may be a single core processor that is typically capable of executing one instruction at a time (or process a single pipeline of instructions) and/or a multi-core processor that may simultaneously execute multiple instructions. In a variety of aspects, a processor 210 may be implemented as a single integrated circuit, two or more integrated circuits, and/or may be a component of a multi-chip module in which individual microprocessor dies are included in a single integrated circuit package and hence share a single socket.

Memory 230 can include a volatile or non-volatile memory device, such as RAM, ROM, EEPROM, or any other device capable of storing data. Communication devices 220 can include network devices (e.g., a network adapter or any other component that connects a computer to a computer network), a peripheral component interconnect (PCI) device, storage devices, disk drives, printer devices, keyboards, displays, etc.

Although specific architectures for computing devices in accordance with embodiments of the present disclosure are conceptually illustrated in FIG. 2, any of a variety of architectures, including those that store data or applications on disk or some other form of storage and are loaded into memory at runtime, can also be used. Additionally, any of the data used in the system can be cached and transmitted once a network connection (such as a wireless network connection via the communications interface) becomes available. In several aspects, the computing device 200 provides an interface, such as an API or web service, which provides some or all of the data to other computing devices for further processing. Access to the interface can be open and/or secured using any of a variety of techniques, such as by using client authorization keys, as appropriate to the requirements of specific applications of the disclosure. In a variety of embodiments, a memory includes circuitry such as, but not limited to, memory cells constructed using transistors, that store instructions. Similarly, a processor can include logic gates formed from transistors (or any other device) that dynamically perform actions based on the instructions stored in the memory. In several embodiments, the instructions are embodied in a configuration of logic gates within the processor to implement and/or perform actions described by the instructions. In this way, the systems and methods described herein can be performed utilizing both general-purpose computing hardware and by single-purpose devices.

In a data mesh, a data catalog is provided that provides a listing of the domain data products available within the data mesh. Each domain data product can be provided by a domain data system. Each domain data system can maintain assocaited data in a format proprietary to the domain data system, while a data mesh self-service platform can provide an interface and/or data to convert the proprietary formatted data in a shared format through the use of opinionated tooling. In this way, data accessed via the domain data products registered the platform allows easy interoperability between different types and schema structures of the data. Data mesh processes can include adding a new domain data product to the data catalog. Once a new data product has been defined, the data mesh registers and makes information about the data product available to other consumer systems and/or users in the platform. This information can be used to contract and negotiate data standards, quality requirements and security authorizations needed.

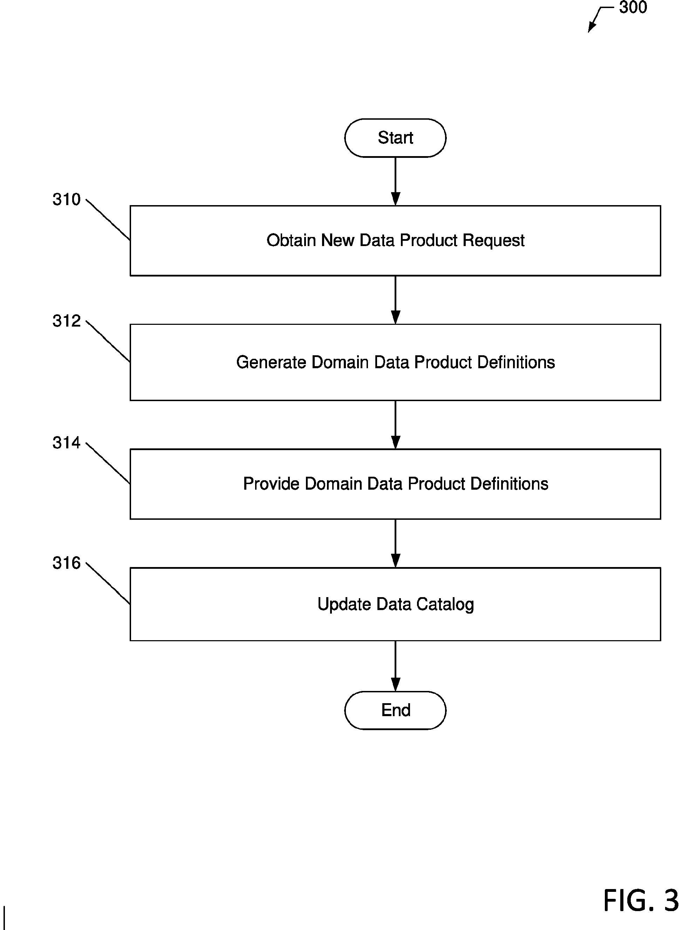

FIG. 3 illustrates a flowchart of a process 300 for registering a domain data product in accordance with an example embodiment of the present disclosure. Process 300 includes obtaining (310) a new data product request. The request can indicate that a particular data product is to be registered in a data catalog provided in a data mesh. The data product request can indicate a domain data system that provides source data and metadata describing the structure of the source data. For example, the metadata can indicate characteristics of the data, such as values present in the data and the semantic meaning associated with those values. In many embodiments, the source data are formatted in a format proprietary to the domain data system.

Domain data product definitions are generated (312). The domain data product definitions can include one or more functions that translate each characteristic of the source data into corresponding characteristics in a shared format. That is, the domain data product definitions can be used to transform the source data from the proprietary format into a shared format used by the data mesh. For example, the domain data product definitions can provide a shared language or vocabulary for expressing the semantic meaning for data. The functions can be provided in a variety of forms. In many embodiments, the functions are provided as instructions (or other computer code) that can be used to automatically process the source data into a shared format used in the data mesh. These instructions can be packaged with the source data as a domain data product. In several embodiments, the functions can be provided as an API. This API can be hosted by a data mesh self-service platform and/or the domain data system providing the domain data product as appropriate. The API can be used to query the domain data system for the source data and automatically transform the source data into the shared format.

Domain data product definitions are provided (314). The domain data product definitions can be provided to the domain data system and/or published as an API that is accessible within the data mesh.

A data catalog is updated (316). The data catalog can be used to identify the domain data products present in the data mesh and obtain one or more versions of the domain data products. The data catalog can be updated to include the domain data product and/or the domain data system. The data catalog provides an indication of the location of the domain data system, such as via a Uniform Resource Locator (URL), Internet Protocol (IP) address, or the like. In this way, the data catalog allows access to a variety of historical versions of the domain data products in a shared format.

Specific processes for registering a domain data product in accordance with the present disclosure are described with respect to FIG. 3. However, it should be understood that any variety of processes, including those that provide domain data product definitions via an API or other interface, can be used as appropriate to the requirements of the specific application of the embodiments of the present disclosure.

In a data mesh, a data catalog is provided that provides a listing of the domain data products available within the data mesh. In order to locate data within the data mesh, a client device can query a data catalog in order to request data. The data request can be transmitted to the appropriate domain data system(s) providing the domain data product, and the requested data can be provided in the shared format. Data mesh processes can include providing data using a data catalog.

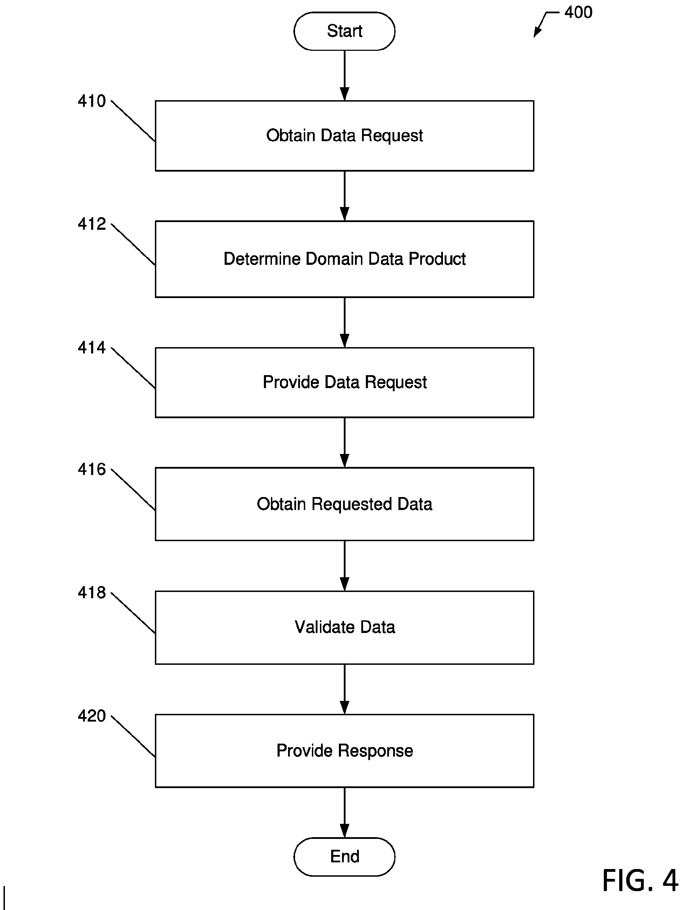

FIG. 4 illustrates a flowchart of a process 400 for providing data using a data catalog in accordance with an example embodiment of the present disclosure. Process 400 includes obtaining (410) a data request. The data request can be provided by a client device and/or any other computing device described herein. The data request can identify a domain data product and/or particular data provided by one or more data products as listed in a data catalog. In many embodiments, the data request indicates a user and/or group requesting the data.

A domain data product is determined (412). The domain data product can be associated with the data indicated in the data request. The domain data product can be provided by a domain data system. In a number of embodiments, the domain data product is determined based on the user and/or group providing the data request. In this way, a user and/or role-based access scheme can be used to control access to the domain data products.

A data request is provided (414). The data request can be provided to the domain data system providing the domain data product. For example, the data request can be transmitted to the domain data system using an API or web service. In a variety of embodiments, the data request indicates the user and/or group.

Requested data is obtained (416). The requested data can include the determined domain data product. The determined domain data product can include the requested data and instructions for validating and/or processing the data. These instructions can be used to transform the requested data from a proprietary format into a shared format as described herein.

Data are validated (418). The data can be validated to ensure that is the data are trustworthy, complete, authentic, and/or otherwise correct as appropriate to the requirements of specific applications of embodiments of the present disclosure. For example, the data can be validated to verify that the data are authentic and generated as of a particular date. In this way, the data can be validated to ensure the reliability and/or suitability thereof for further processing.

A response is provided (420). The response can be provided to the client device that provided the data request. The response can include the requested data in the shared format, the instructions, and/or the results of validating the data.

Specific processes for providing data using a data catalog in accordance with the present disclosure are described with respect to FIG. 4. However, it should be understood that any variety of processes, including those where the domain data systems provide the response directly to the requesting device, such as via an API provided by the domain data system, can be used as appropriate to the requirements of the specific application of the embodiments of the present disclosure.

The Data Mesh paradigm can be used to build large scale data platforms over traditional methods by combining data architecture first principles, organizational structure, and business processes through the use of a self-service infrastructure Platform and business use case driven data products. This approach leads to accelerated data driven insights and actions over a feedback loop.

The data mesh reference implementation includes a set of software services, libraries, tools, and code that offers organizations the ability to quickly start building data applications while conforming to these data mesh first principles. The data mesh self-service platform provides a variety of advantages over traditional data platforms and tooling. For example, the data mesh self-service platform provides an editable, open source data product specification that can be used to create and deploy a data product in a given environment.

Data products created by submitting the specification are repeatable instances of the blueprint that can include multiple infrastructure components, data transform pipelines, security policies, audit controls, monitoring and logging, and/or storage and compute, and act as a container on which specific business functionality can be built. The infrastructure code and configuration lives as part of the blueprint module, which can be customized according to the environment and tools defined by the user.

Data products can interact with wider shared platform components to publish and consume relevant information with different layers of the central platform for various needs and automate key organizational processes and enforce standards with less developer involvement. Data products can be used to enforce authentication and authorization, and only persons who have access to the data products can build and customize those data products. Data products are modular via the use of blueprints, and allow for replacing and integrating parts of the platform with different tools and technologies.

The self-service functionality for creating infrastructure, writing data transformations, creating visualizations, performing analytics, and creating custom logic through various tools and libraries is also offered by the platform. Interoperability between data products is achieved via the use of a variety of Software Development Kits ("SDK"), such as a data product SDK, port SDK, and/or any other APIs or SDKs offered by the self-service platform. Users can extend, customize, and create new capabilities on the platform by modification of blueprint definitions and libraries and tooling through use of plugins and adapters.

The platform offers a way to continuously update the blueprint and apply changes to existing deployed data products in a variety of ways. The data product architecture quantum and platform architecture can be changed and upgraded easily. For example, new capabilities and/or infrastructure can be backported to existing data products, data products can be managed together (for example, an upgrade can be made to all data products to enforce a new storage security policy on all output ports), lifecycle operations can be performed in a way where each data product holds its own state, custom infrastructure can be built on top of existing data products.

The framework takes into consideration that a data product is an instance of a blueprint applied to a specification and environment configuration that is upgradeable and/or stateless. For example, a data mesh can include a lifecycle operations API that allows and records changes over time. This approach is unique and innovative because the approach shifts the narrative away from the typical "What is my data product boundary", to "what is a domain boundary" by allowing the data product to be easily refactored, changed or customized.

In addition, platform tooling and model contracts in the data mesh provide a plug and play style architecture. This architecture allows a specification or interface along with different models to be defined for particular adapters and/or data products, which allows for a wide range of tooling and customization of the data product. In addition, this architecture allows interoperability between multiple technologies, such as different service providers, using connectors with governance, quality, and the like built in. The data mesh platform provides the ability to create source-aligned data products from scratch with harmonization, data quality, and monitoring rules automatically generated based on business specifications. This tooling can be extended for new data sources (e.g., domain data systems and/or data products).

Broadcast updates can be performed on code packages and component packages in a hierarchical manner from mesh platform to products. A repository can be generated for each data product, which can include a variety of metadata related to the data product. The repository can be packaged, built, and deployed by the platform to orchestrate the deployment of updates in a stateless manner.

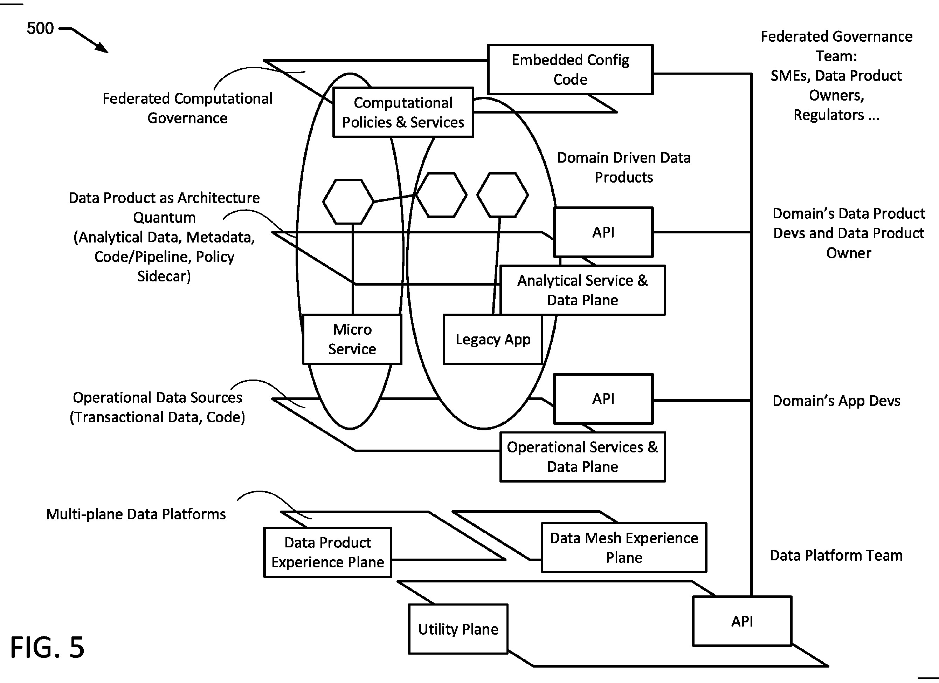

FIG. 5 is a conceptual illustration of a data mesh platform architecture in accordance with a variety of embodiments of the present disclosure. The data mesh platform architecture 500 includes a federated computational governance layer, a data product as architecture layer, an operational data sources layer, and a data platforms layer. The federated governance layer allows data product owners to define, store, and manage data in a domain-specific manner. The data product as architecture layer allows for a dynamic mapping of the domain-specific data definitions to be mapped to a shared definition defined within the data mesh platform. The operational data sources layer provides transactional data and/or supporting software to be defined and stored to facilitate the communication of data via the data mesh platform. The data platforms layer provides a data catalog and/or interfaces used to locate and access the data products.

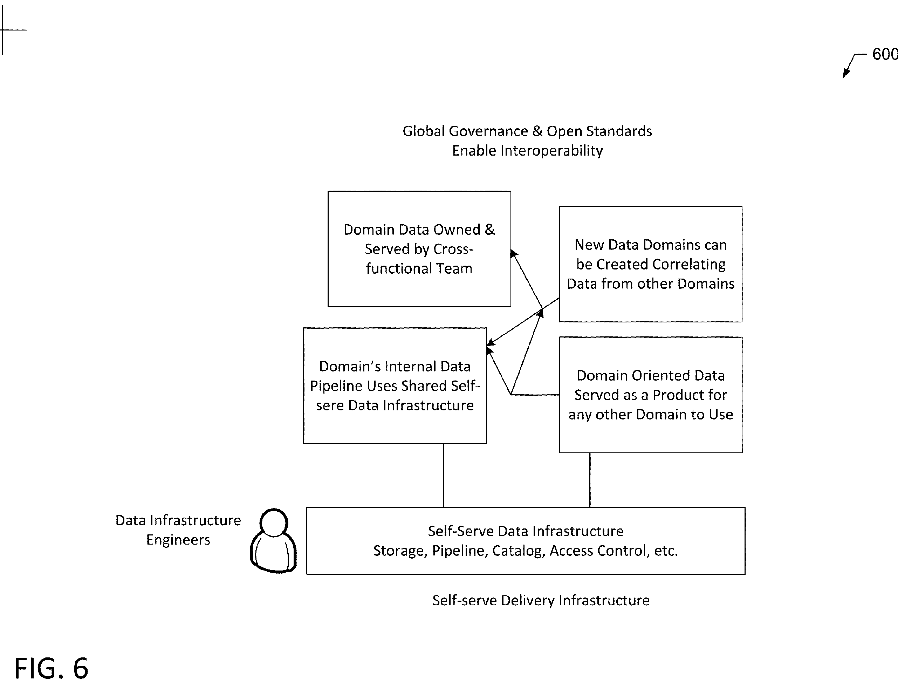

FIG. 6 is a conceptual illustration of a data mesh platform in accordance with a variety of embodiments of the present disclosure. The data mesh platform 600 includes a self-service delivery infrastructure including a data catalog, data storage, data pipelines, access control, and the like. The self-service delivery infrastructure provides access to a number of data domains that provide data products as described herein.

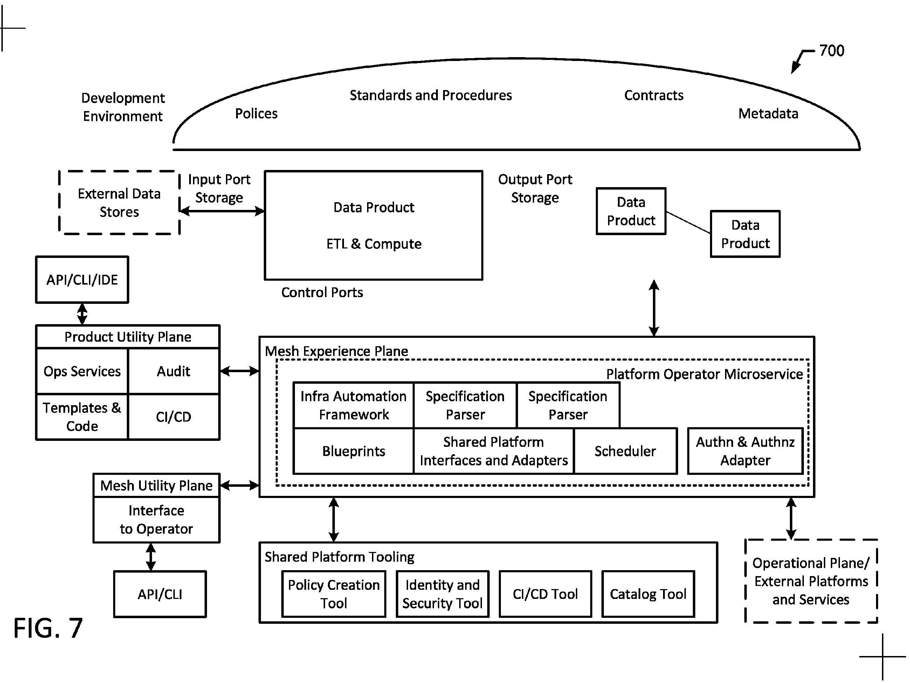

FIG. 7 is a conceptual illustration of a data flow within a data mesh platform in accordance with a variety of embodiments of the present disclosure. The data flow 700 includes a deployment environment, a data storage layer, a data product experience layer, a mesh experience layer, and a shared platform tooling layer. The deployment environment includes a variety of policies, standards, and metadata defining the shared format used within the data mesh platform. The data storage layer includes the data products and the data pipelines used to dynamically convert each data domain into a data product. The data product experience layer provides a variety of SDKs and APIs used to define the data products and facilitate the generation of the data products from the domain data sources. The mesh experience layer provides the necessary SDKs and APIs to authenticate users and access data provided by each domain data system as described herein. The shared platform tooling layer provides a set of SDKs and APIs that can be used to define and create data products as described herein. The platform's and data product's infrastructure creation can be automated through infrastructure as code. The infrastructure code lives as part of the blueprint module, which can be customized according to the environment and tools used by the company or department.

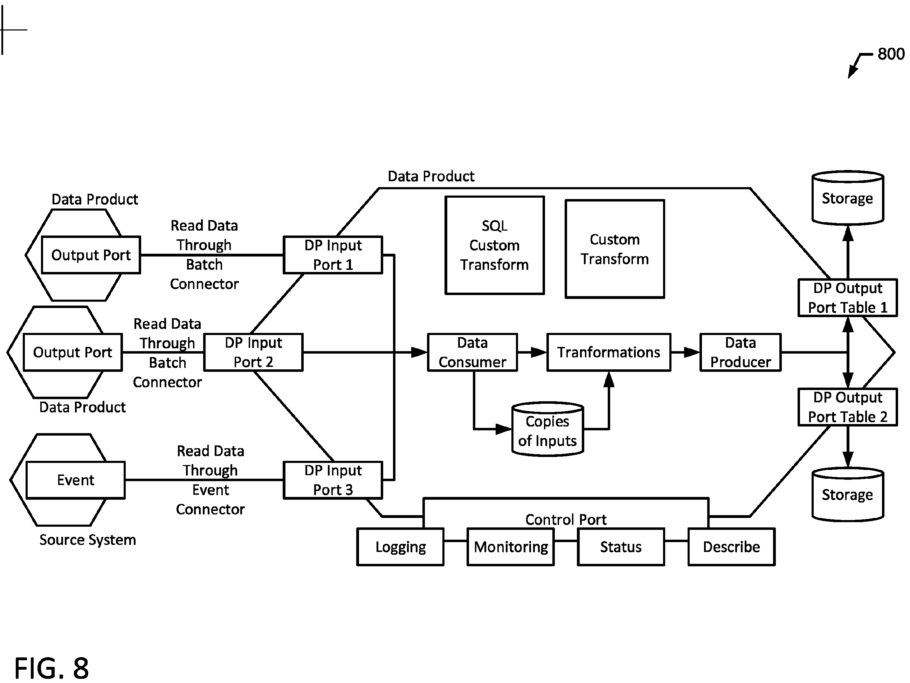

FIG. 8 is a conceptual illustration of a data product in accordance with a variety of embodiments of the present disclosure. The data product 800 includes a variety of output ports, input ports, and control ports, and defines a variety of transformations that convert data received via an input port to an expected data product to a consumer via an output port. The specific output can vary by consumer, and a data product can provide a number of output ports depending on the requirements for a specific consumer of the data. The input ports can receive data stored by one or more domain data systems as described herein. The control ports can provide a variety of functionality for logging, authentication, monitoring, and the like of the data products within the data mesh platform.

Although a variety of data mesh platforms and data products are described above with respect to FIGS. 5-8, it should be appreciated that any number of variations, including those that use different conceptual layers within the data mesh platform and those with an alternative architecture for a data product, can be used in accordance with embodiments of the present disclosure.

A data mesh self-service platform can include a set of services that allows a consumer to build/run and maintain data products in a self-service manner through use of various interfaces offered. The platform can also act as an intermediary between deployed data products and shared tooling to enable key functionalities.

The data product can include set of data infrastructure tooling that is self-contained, has a unique identity, and is used as a container to build custom data processing logic. The data product can also include SDKs, libraries, and/or tooling to enable seamless interoperability between other data products and/or automated interactions with the self-service platform. A data product blueprint can be used to define a shared and repeatable pattern of infrastructure, software interactions, and/or configurations to create data products.

The specification of a data product describes the configuration and high level capabilities desired from a data product at the time of creation or during the lifecycle thereof. The specification can be updated and deployed at any given time. The specification includes information such as input ports, output ports, processes, metadata regarding the data product, and/or any other relevant information about the datasets of the data product.

The operator can be a software service responsible for the lifecycle of data products. The operator takes in configuration of the environment, specification of the data product, and the blueprint to facilitate the creation, update, and deletion of one or more data products.

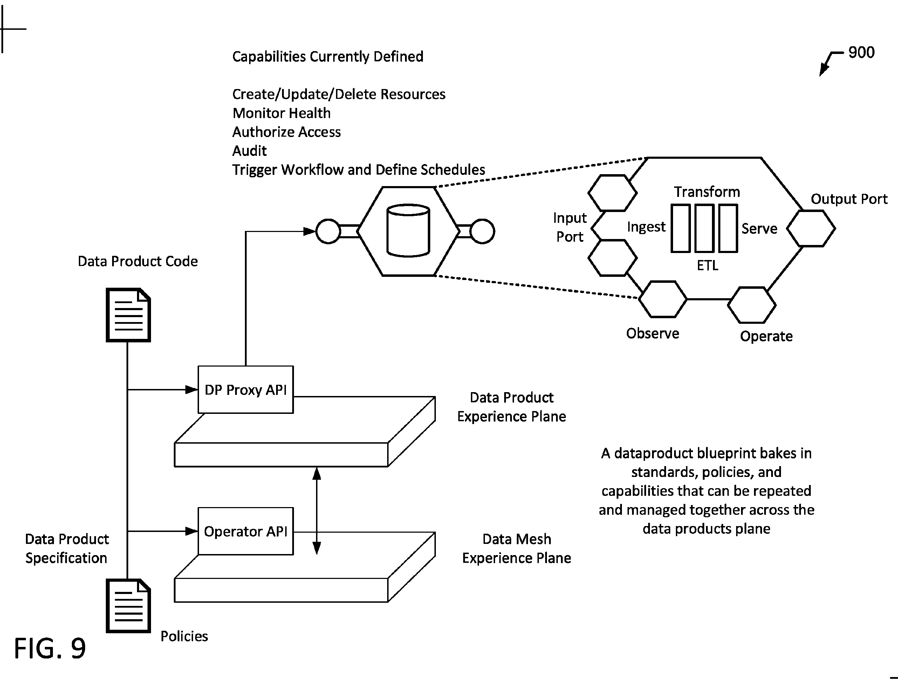

FIG. 9 is a conceptual illustration of a data product lifecycle creation flow in accordance with a variety of embodiments of the present disclosure. The flow 900 includes a data product developer that users a data product blueprint to generate a data product based on the blueprint and the capabilities for a data product defined within the data mesh system.

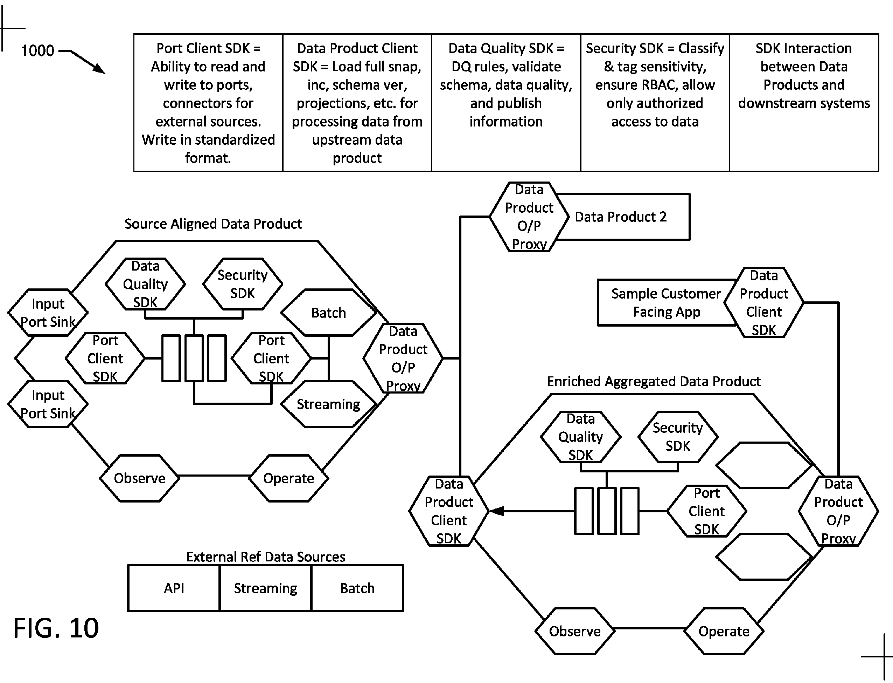

FIG. 10 is a conceptual illustration of control flow between data product interfaces in accordance with a variety of embodiments of the present disclosure. The control flow 1000 includes a source aligned data product having a variety of input ports and output ports. The input ports receive data from a number of external data sources. The output of the data product is used as an input, as well as an output from second data product, as inputs to an enriched aggregate data product. The enriched aggregate data product processes the data from both the source aligned data products, and outputs data to a customer facing application.

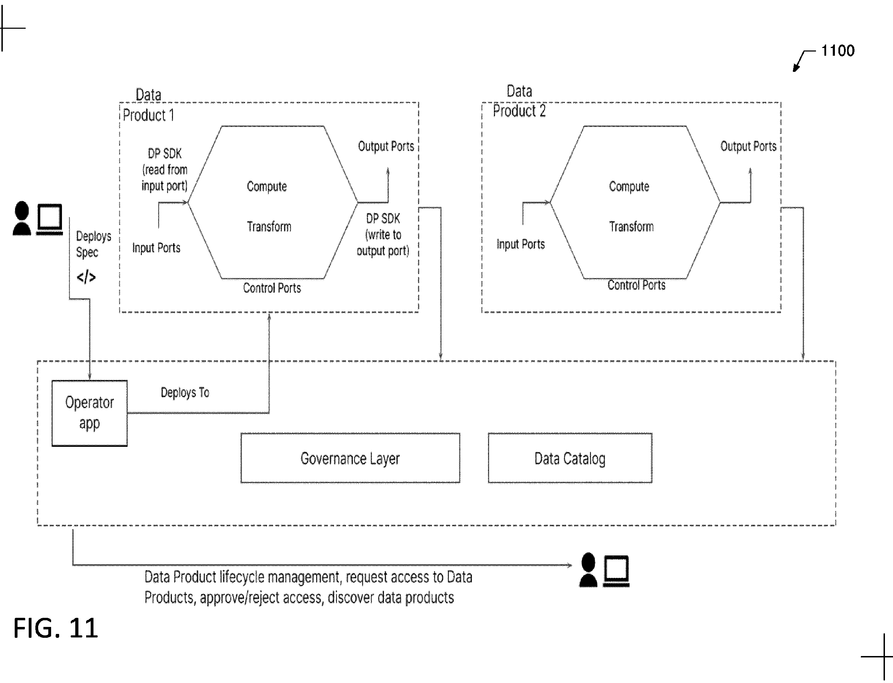

FIG. 11 is a conceptual illustration of a logical data architecture of a data mesh platform in accordance with a variety of embodiments of the present disclosure. The logical data architecture 1100 includes two data products that can be accessed via a data catalog. The data catalog has an operator application that allows access to a governance layer and/or the data catalog.

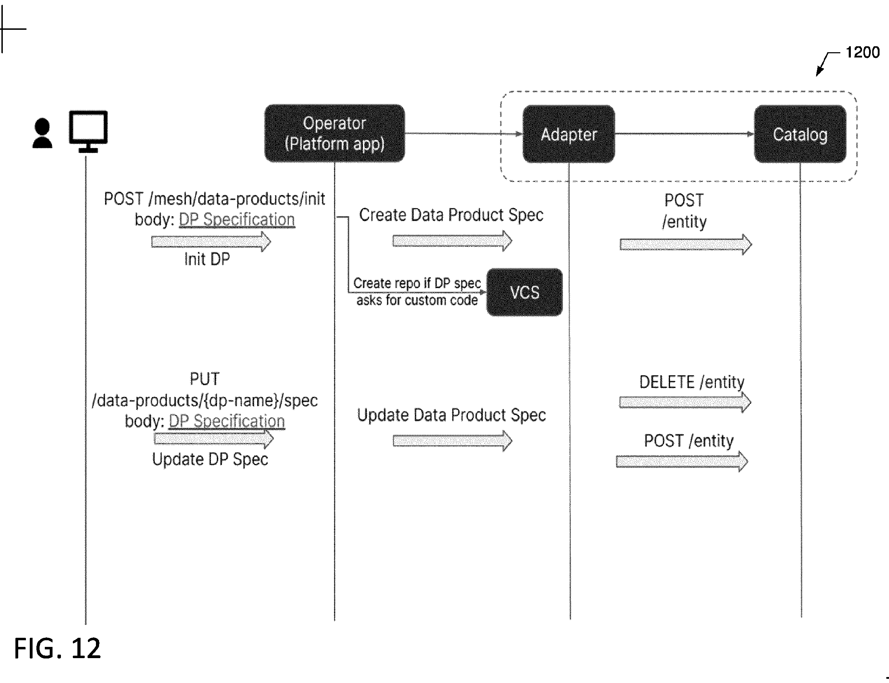

FIG. 12 is a data product creation workflow in accordance with an embodiment of the present disclosure. The workflow 1200 includes initializing a data product, creating a data product specification, and creating an entry for the data product in a data catalog. Updates to the data product specification can be propagated and stored in the data catalog by updating the existing data product or creating a new data product based on the updates.

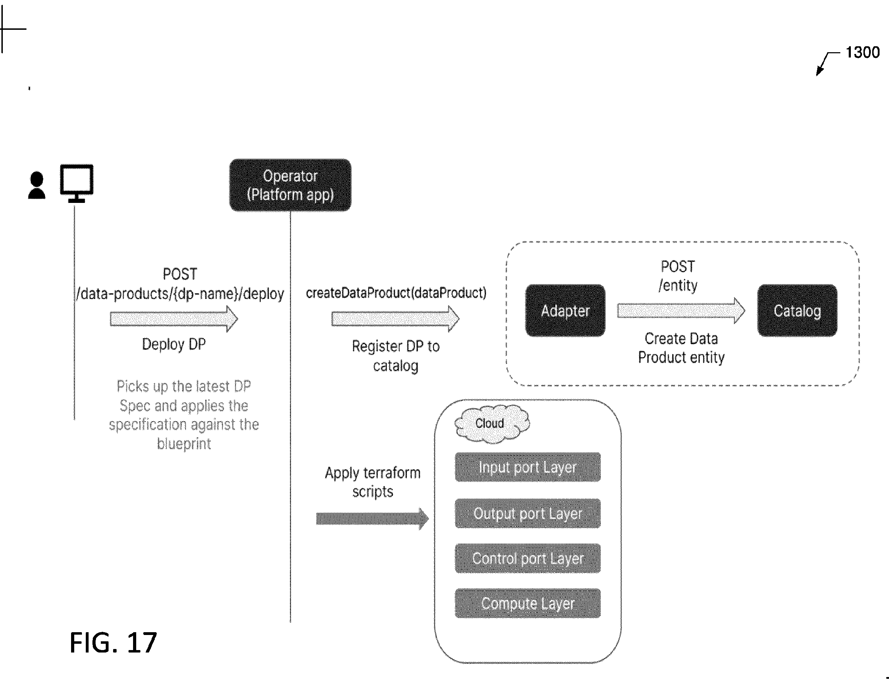

FIG. 13 is a data product creation workflow in accordance with an embodiment of the present disclosure. The workflow 1300 includes deploying a data product to a data catalog and validating the data product using the specification and/or blueprint for the data product. In order to publish the data product in the data catalog, a variety of ETL processes can be performed and/or added to the data product to process the data source data into the appropriate output for the data product as described herein.

Although a variety of data mesh architectures and workflows are described herein with respect to FIGS. 9-13, it should be appreciated that any number of variations, including those that use more or fewer steps for publishing a data product in a data catalog, can be used in accordance with embodiments of the present disclosure.

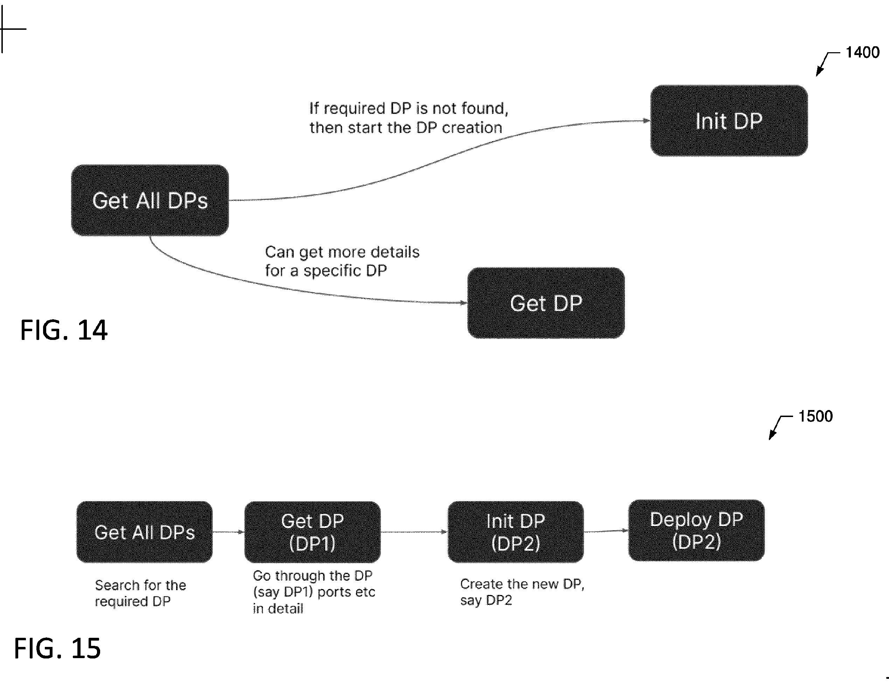

FIG. 14 is a flowchart conceptually illustrating a process for requesting a particular data product in accordance with an embodiment of the present disclosure. The process 1400 includes requesting all data products. If a particular requested data product is not present, a new data product can be initialized. If the particular requested data product is available, the data product can be fetched.

FIG. 15 is a flowchart conceptually illustrating a process for accessing an existing data product in accordance with an embodiment of the present disclosure. The process 1500 includes searching for a requested data product. If the requested data product indicates data that are not available from any existing data product, a closest matching data product can be selected, and a new data product can be created based on the requested data product and the existing data provided by the closest matching data product. The new data product can be deployed to the data catalog and used as responsive to the requested data product.

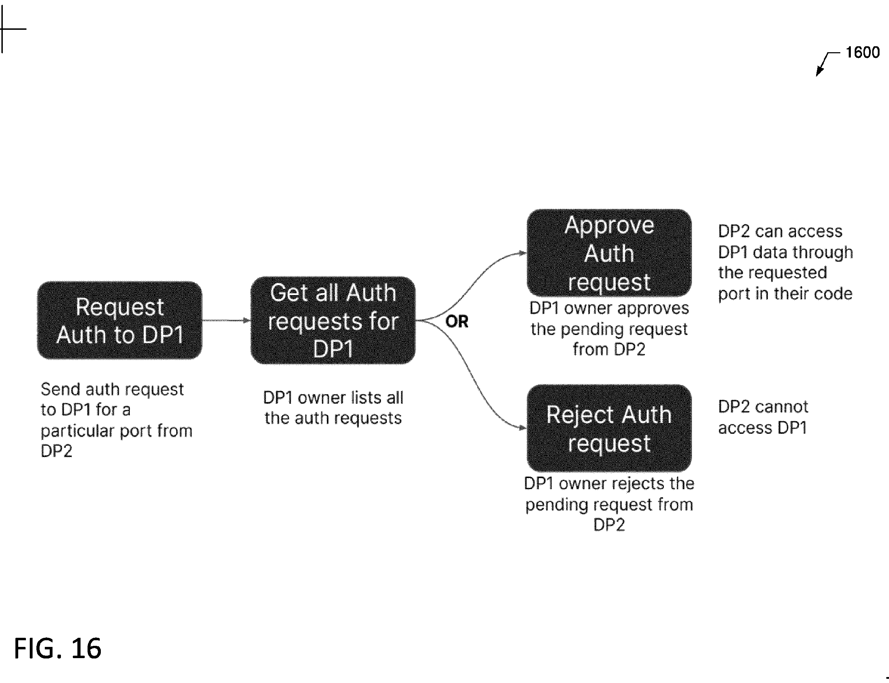

FIG. 16 is a flowchart conceptually illustrating a process for authenticating a request for data in accordance with an embodiment of the present disclosure. The process 1600 includes requesting, from a second data product, data provided by a first data product. The first data product can approve or deny the request from the second data product. If the request is approved, the first data product provides the data to the second data product. If the request is denied, the first data product does not provide the data.

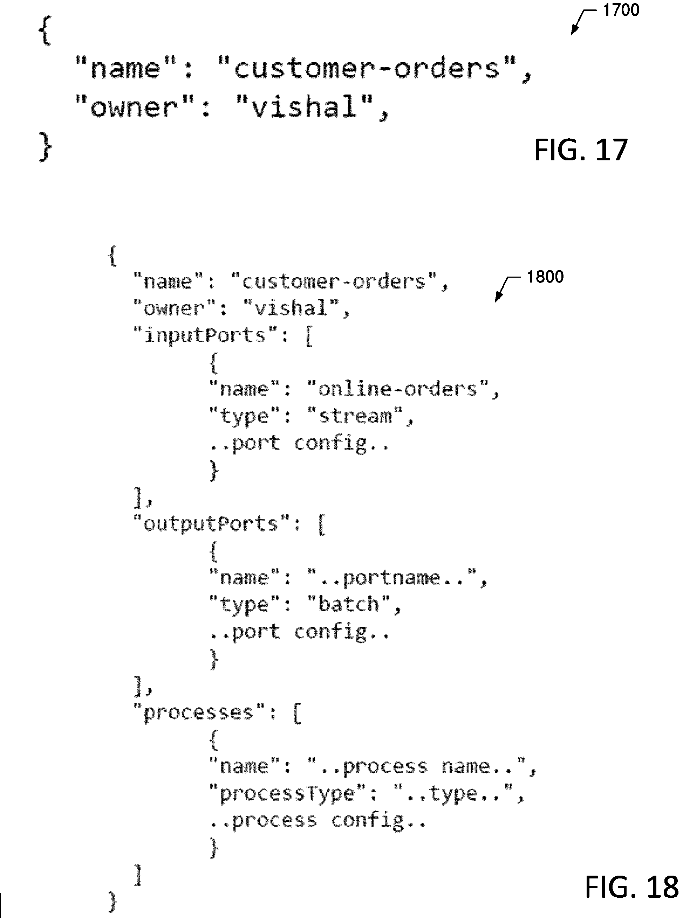

FIG. 17 is pseudocode showing the structure of a request to initialize a data product in accordance with an embodiment of the present disclosure. The pseudocode 1700 includes a variety of attributes including a name for the data product and an owner of the data product.

FIG. 18 is pseudocode showing the structure of a request to update a data product in accordance with an embodiment of the present disclosure. The pseudocode 1800 includes a variety of attributes including a name of the data product, an owner of the data product, a definition of the input ports of the data product, a definition of the output ports of the data product, and a definition of each process provided by the data product.

Although a variety of processes and pseudocode are described herein with respect to FIGS. 14-18, it should be appreciated that any number of variations, including those that use different conceptual steps for generating and accessing data and those that define data products using fewer or more attributes, can be used in accordance with embodiments of the present disclosure.

It will be appreciated that all of the disclosed methods and procedures described herein can be implemented using one or more computer programs, components, and/or program modules. These components may be provided as a series of computer instructions on any conventional computer readable medium or machine-readable medium, including volatile or non-volatile memory, such as RAM, ROM, flash memory, magnetic or optical disks, optical memory, or other storage media. The instructions may be provided as software or firmware, and/or may be implemented in whole or in part in hardware components such as ASICs, FPGAs, DSPs, or any other similar devices. The instructions may be configured to be executed by one or more processors, which when executing the series of computer instructions, performs or facilitates the performance of all or part of the disclosed methods and procedures. As will be appreciated by one of skill in the art, the functionality of the program modules may be combined or distributed as desired in various aspects of the disclosure.

Although the present disclosure has been described in certain specific aspects, many additional modifications and variations would be apparent to those skilled in the art. In particular, any of the various processes described above can be performed in alternative sequences and/or in parallel (on the same or on different computing devices) in order to achieve similar results in a manner that is more appropriate to the requirements of a specific application. It is therefore to be understood that the present disclosure can be practiced otherwise than specifically described without departing from the scope and spirit of the present disclosure. Thus, embodiments of the present disclosure should be considered in all respects as illustrative and not restrictive. It will be evident to the annotator skilled in the art to freely combine several or all of the embodiments discussed here as deemed suitable for a specific application of the disclosure. Throughout this disclosure, terms like "advantageous", "exemplary" or "preferred" indicate elements or dimensions which are particularly suitable (but not essential) to the disclosure or an embodiment thereof, and may be modified wherever deemed suitable by the skilled annotator, except where expressly required. Accordingly, the scope of the invention should be determined not by the embodiments illustrated, but by the appended claims and their equivalents.

## Claims

1. A computer-implemented method, comprising:
obtaining a new data product request from a domain data system;
generating domain data product definitions;
providing the domain data product definitions to the domain data system; and
updating a data catalog to indicate the domain data system and the domain data product definitions.

2. The computer-implemented method of claim 1, wherein the domain data product definitions comprise an indication of a data type, infrastructure needed, and code for processing data of the data type.

3. The computer-implemented method of claim 1, further comprising:
obtaining a request for data from a client device, the request for data indicating the domain data system;
providing the request to the domain data system;
obtaining requested data based on the request;
validating the requested data; and
providing the validated data to the client device.

4. The computer-implemented method of claim 3, wherein validating the requested data comprises executing code provided in the requested data to process data provided in the requested data.

5. The computer-implemented method of claim 1, further comprising:
obtaining a request for data from a second domain data system, the request for data indicating the domain data system;
providing the request to the domain data system;
obtaining requested data based on the request;
validating the requested data; and
providing the validated data to the second domain data system.

6. The computer-implemented method of claim 1, further comprising:
infrastructure code for a blueprint and platform;
a first mechanism for building and deploying the infrastructure code;
a second mechanism for updating and upgrading the infrastructure code; and
a third mechanism for customizing the infrastructure code for the blueprint.

7. The computer-implemented method of claim 1, further comprising:
receiving, at a first data product, a request for data managed by a second data product;
receiving, at the first data product, the data managed by the second data product;
processing at the first data product, the data managed by the second data product; and
outputting, from the first data product, the data managed by the second data product as processed by the first data product.

8. The computer-implemented method of claim 1, wherein the new data product request is obtained from the domain data system using a specification documentation.

9. The computer-implemented method of claim 1, wherein the domain data product definitions are generated based on a blueprint.

10. The computer-implemented method of claim 1, wherein the domain data product definitions enforce shared global data standards and processes through blueprints and allow a data product owner to customize the blueprints via a data product specification or thereafter directly on owned data product infrastructure.

11. A computer system, comprising:
a processor; and
a memory including instructions that when performed by the processor perform processes including:
obtaining a new data product request from a domain data system;
generating domain data product definitions;
providing the domain data product definitions to the domain data system; and
updating a data catalog to indicate the domain data system and the domain data product definitions.

12. The computer system of claim 11, wherein the domain data product definitions comprise an indication of a data type, infrastructure needed, and code for processing data of the data type.

13. The computer system of claim 11, the processes further comprising:
obtaining a request for data from a client device, the request for data indicating the domain data system;
providing the request to the domain data system;
obtaining requested data based on the request;
validating the requested data; and
providing the validated data to the client device.

14. The computer system of claim 13, wherein validating the requested data comprises executing code provided in the requested data to process data provided in the requested data.

15. The computer system of claim 11, the processes further comprising:
obtaining a request for data from a second domain data system, the request for data indicating the domain data system;
providing the request to the domain data system;
obtaining requested data based on the request;
validating the requested data; and
providing the validated data to the second domain data system.

16. The computer system of claim 11, the instructions further comprising:
infrastructure code for a blueprint and platform;
a first mechanism for building and deploying the infrastructure code;
a second mechanism for updating and upgrading the infrastructure code; and
a third mechanism for customizing the infrastructure code for the blueprint.

17. The computer system of claim 11, the processes further comprising:
receiving, at a first data product, a request for data managed by a second data product;
receiving, at the first data product, the data managed by the second data product;
processing at the first data product, the data managed by the second data product; and
outputting, from the first data product, the data managed by the second data product as processed by the first data product.

18. A memory storing instructions that when executed by a processor perform processing including:
obtaining a new data product request from a domain data system;
generating domain data product definitions;
providing the domain data product definitions to the domain data system; and
updating a data catalog to indicate the domain data system and the domain data product definitions.

19. The memory of claim 18, wherein the domain data product definitions comprise an indication of a data type, infrastructure needed, and code for processing data of the data type.

20. The memory of claim 18, the processes further comprising:
obtaining a request for data from a client device, the request for data indicating the domain data system;
providing the request to the domain data system;
obtaining requested data based on the request;
validating the requested data; and
providing the validated data to the client device.

21. The memory of claim 20, wherein validating the requested data comprises executing code provided in the requested data to process data provided in the requested data.

22. The memory of claim 18, the processes further comprising:
obtaining a request for data from a second domain data system, the request for data indicating the domain data system;
providing the request to the domain data system;
obtaining requested data based on the request;
validating the requested data; and
providing the validated data to the second domain data system.
